# EUROPÄISCHE PATENTSCHRIFT

(11) **EP 0 866 217 B1**
(45) Veröffentlichungstag und Bekanntmachung des Hinweises auf die Patenterteilung: **10.04.2002**
(21) Anmeldenummer: 98100685.1
(22) Anmeldetag: 16.01.1998
(51) Int. Cl.: F01L 3/06, F01L 1/26, F01L 13/00

(54) **Brennkraftmaschine mit einer Anzahl von Hubventilen**
Multivalve engine
Moteur multisoupape

(30) Priorität: 21.03.1997 DE 19711790
(43) Veröffentlichungstag der Anmeldung: 23.09.1998
(73) Patentinhaber: AUDI AG, 85045 Ingolstadt (DE)
(72) Erfinder: Henning, Hermann, 74248 Ellhofen (DE); Scheu, Joachim, 74206 Bad Wimpfen (DE)

(56) Entgegenhaltungen:
- EP-A- 0 764 770
- DE-C- 657 946
- US-A- 5 230 310
- US-A- 5 301 640

## Beschreibung

Die vorliegende Erfindung betrifft eine Brennkraftmaschine mit einer Anzahl von Hubventilen für den Ladungswechsel, wobei pro Zylinder wenigstens zwei Einlaßventile sowie eine Anzahl Auslaßventile vorgesehen sind und die Einlaßventile einen Ventilteller und einen Ventilschaft aufweisen, wobei der Ventilteller mit einem Ventilsitz im Zylinderkopf zusammenwirkt und der Ventilschaft in einer Ventilführung im Zylinderkopf gleitend geführt ist. Eine solche Brennkraftmaschine ist aus US-A-5 230 310 bekannt.

Ein Einlaßventil für Gasmaschinen ist bekannt, welches einen von dem Ventilteller ausgehenden und den Ventilsitz koaxial umgebenden Schirm träg, der gegenüber dem Ventilsitz nur ein geringes Spiel aufweist und der an seinem Randbereich mit Kanälen oder Öffnungen ausgestattet ist. Die Kanäle oder Öffnungen sind dabei so ausgebildet, daß sich für das einströmende Gas ein mit der Größe des Ventilhubs zunehmender Durchtrittsquerschnitt ergibt. Eine für die Verbrennung des Gases günstige Verwirbelung wird damit jedoch nicht bewirkt. Es läßt sich lediglich eine kontrollierte Zunahme des einströmenden Gases verwirklichen.

Zudem ist in der Druckschrift CH-PS 366 423 eine ventilgesteuerte Viertakt-Brennkraftmaschine mit direkter Brennstoffeinspritzung beschrieben, deren Einlaßventile jeweils eine Ablenknase sowie einen zylindrischen Abschnitt aufweisen. Dort erteilt die Ablenknase der einströmenden Verbrennungsluft einen kräftigen Drall um die Ventil- bzw. Zylinderachse, während der zylindrische Abschnitt bewirkt, daß die Einlaßventile erst dann öffnen, wenn sie einen gewissen Hub ausgeführt haben und bereits wieder schließen, bevor sie ihren Sitz ganz erreicht haben. Die verbesserte Gemischverwirbelung geht daher in erster Linie auf die Ablenknasen zurück.

Bei diesem Stand der Technik wird jedoch als nachteilig empfunden, daß die Einlaßventile keine rotationssymmetrischen Bauteile sind und daher zusätzliche Bearbeitungsschritte erfordern.

Darüber hinaus kann der für einen Ladungswechsel zur Verfügung stehende Zeitraum aufgrund der zylindrischen Abschnitte nicht voll genutzt werden und sind aufwendige Maßnahmen, wie zum Beispiel geänderte Nockenkonturen und dergleichen, erforderlich, um den für den Ladungswechsel zur Verfügung stehenden Zeitraum zu vergrößern.

Es ist Aufgabe der vorliegenden Erfindung, eine Brennkraftmaschine so weiterzubilden, daß durch den Einsatz einfach ausgebildeter Einlaßventile eine verbesserte Gemischaufbereitung realisiert wird. Außerdem soll der für den Ladungswechsel zur Verfügung stehende Zeitraum dabei nicht unnötig verkürzt werden.

Die Aufgabe wird durch die Merkmale des Patentanspruchs 1 gelöst.

Indem die wenigstens zwei Einlaßventile zum Teil eine sich an den Ventilteller anschließende und den Ventilschaft koaxial umgebende im wesentlichen zylindrische Stufe aufweisen und zum Teil keine solche Stufe aufweisen, sind bei den wenigstens zwei Einlaßventilen im Bereich des anfänglichen Ventilhubs unterschiedliche Durchtrittsquerschnitte für das einströmende Gasgemisch verwirklicht. Denn das Gasgemisch tritt zu Beginn des Hubs im wesentlichen durch den Einlaßkanal ein, der von dem Einlaßventil ohne Stufe beherrscht wird, während durch den Einlaßkanal, der von dem Einlaßventil mit Stufe beherrscht wird, zunächst nur ein geringer Durchsatz möglich ist und erst ab einem Hub, der größer ist als die Höhe der Stufe, der volle Durchtrittsquerschnitt freigegeben wird. Die entspricht einem zeitlichen Versatz der vollständigen Öffnung der Einlaßventile, wobei in der Phase zwischen der versetzten vollständigen Öffnung der Einlaßventile jedoch bereits ein begrenztes Einströmen des Gasgemisches entlang des wenigstens einen Einlaßventils mit der zylindrischen Stufe erfolgen kann.

Durch den zeitlichen Versatz der vollständigen Ventilöffnung bildet sich im Zylinder der Brennkraftmaschine eine Verwirbelung des Gasgemisches aus, deren Drehsinn von der jeweiligen Anordnung der Einlaßventile, das heißt von der Positionierung des wenigstens einen Einlaßventils mit Stufe gegenüber dem wenigstens einen Einlaßventil ohne Stufe abhängig ist.

Erfindungsgemäß wird der für den Gaswechsel zur Verfügung stehende Zeitraum auch nicht unnötig verkürzt, da ja wenigstens eines der Einlaßventile ohne Stufe ausgebildet ist und daher frühzeitig den vollen Durchtrittsquerschnitt zur Verfügung stellt und den vollen Durchtrittsquerschnitt dann auch langzeitig aufrechterhält.

In Experimenten hat es sich als äußerst vorteilhaft erwiesen, wenn die Stufe des wenigstens einen Einlaßventils eine Höhe von ca. 10% - 30% des maximalen Ventilhubs aufweist.

Außerdem hat es sich als zweckmäßig erwiesen, wenn im geschlossenen Zustand der Einlaßventile zwischen der Stufe des wenigstens einen Einlaßventils und dem Ventilsitz ein Abstand von ca. 0,5% bis 8% des maximalen Ventilhubs besteht. Denn somit ist stets gewährleistet, daß die Stufe des Einlaßventils den Ventilsitz sicher passiert, ohne daß es dabei zu einem Verklemmen kommen kann. Geht der Abstand über dieses Maß hinaus, so ist die vorteilhafte Wirkung der Erfindung deutlich abgeschwächt, da dann im Bereich der Stufe ein sehr großer Durchtrittsquerschnitt realisiert ist.

Bevorzugt sind drei im wesentlichen nebeneinander angeordnete Einlaßventile vorgesehen, von denen zum Beispiel eines der seitlichen Einlaßventile die Stufe aufweist. Dadurch, daß nur eines der seitlichen Einlaßventile mit Stufe ausgebildet ist, kann sich im Brennraum eine drallförmige Strömung ausbilden, deren Drehsinn von dem einen seitlichen Einlaßventil mit Stufe über die benachbarten Einlaßventile ohne Stufe gerichtet ist. Sind die Einlaßkanäle darüber hinaus besonders ausgebildet, wie zum Beispiel als Tumblekanäle, so kann sich der Drallströmung eine Tumbleströmung überlagern, die im Zylinder zu einer vorteilhaften Drallströmung mit zur Zylinderachse schräg orientierter Achse führt.

Besonders bevorzugt weisen von den drei im wesentlichen nebeneinander angeordneten Einlaßventilen zum Beispiel eines der seitlichen Einlaßventile und das mittlere Einlaßventil die Stufe auf. Bedingt durch dieses Merkmal bildet sich eine verstärkte drallförmige Strömung aus.

Vorteilhaft weist dann die Stufe des einen seitlichen Einlaßventils eine größere Höhe auf als die Stufe des mittleren Einlaßventils, während das andere seitliche Einlaßventil keine Stufe aufweist. Dadurch ergibt sich ein weiterer Versatz beim vollständigen Öffnen der insgesamt drei Einlaßventile, so daß die durch die gewählte Anordnung ausgebildete Strömungsform des einströmenden Gasgemisches noch feiner gesteuert werden kann.

Alternativ oder zusätzlich ist auch denkbar, daß die Stufe des einen seitlichen Einlaßventils einen geringeren Abstand zum Ventilsitz aufweist als die Stufe des mittleren Einlaßventils, während das andere seitliche Einlaßventil keine Stufe aufweist. Dadurch wird beim Öffnen erreicht, daß das mittlere Einlaßventil mit Stufe vor der Freigabe des vollen Durchtrittsquerschnitts bereits eine etwas größere Menge an Gasgemisch in die Brennkammer einströmen läßt als das eine seitliche Einlaßventil mit Stufe und geringerem Abstand zum Ventilsitz. Natürlich weisen die insgesamt drei Einlaßventile somit auch beim Schließen unterschiedliche Durchtrittsquerschnitte auf, wodurch die anfangs induzierte Strömung verstärkt wird.

Besonders vorteilhaft ist es, wenn bei der erfindungsgemäßen Brennkraftmaschine der Hub des wenigstens einen Einlaßventils mit Stufe variabel steuerbar ist. Denn auf diese Weise ist es möglich, daß dann, wenn der Hub die Höhe der zylindrischen Stufe überschreitet, eine verbesserte Gemischaufbereitung erfolgen kann, während dann, wenn der Hub die Höhe der zylindrischen Stufe unterschreitet, die Einlaßventile mit Stufe quasi abgeschaltet werden können, indem durch die von diesen Einlaßventilen beherrschten Einlaßkanäle kein voller Ladungseintrag erfolgt. Daher läßt sich die Gemischaufbereitung in einem sehr weiten Bereich variieren.

In einer besonderen Ausführungsform trägt mindestens eine der zylindrischen Stufen der Einlaßventile einen zur Ventilachse geneigt verlaufenden Abschnitt und sind die Einlaßventile gegen ein Verdrehen gesichert. Dadurch kann der Gemischverwirbelung eine zusätzliche Richtungskomponente gegeben werden.

Gemäß einer anderen Ausführungsform trägt die zylindrische Stufe des bzw. der Einlaßventile einen sich verjüngenden rotationssymmetrischen Abschnitt. Mittels dieses Abschnitts kann der durch die Stufe entstehende Strömungswiderstand im Einlaßkanal günstig beeinflußt werden.

Die vorliegende Erfindung wird unter Bezugnahme auf die nachfolgenden Zeichnungsfiguren näher erläutert. Es zeigen:
- Figur 1: Ein Einlaßventil mit zylindrischer Stufe, das sich gegenüber einem Ventilsitz der Brennkraftmaschine in geschlossenem Zustand befindet, in stark vergrößertem Maßstab;
- Figur 2: ein Diagramm, welches den Durchtrittsquerschnitt der Einlaßventile mit und ohne Stufe als Funktion des Kurbelwellenwinkels der Brennkraftmaschine zeigt; und
- Figuren 3a bis 3c: jeweils eine schematische Teildarstellung der erfindungsgemäßen Brennkraftmaschine, wobei eines der drei Einlaßventile bzw. zwei der drei Einlaßventile eine Stufe aufweisen.

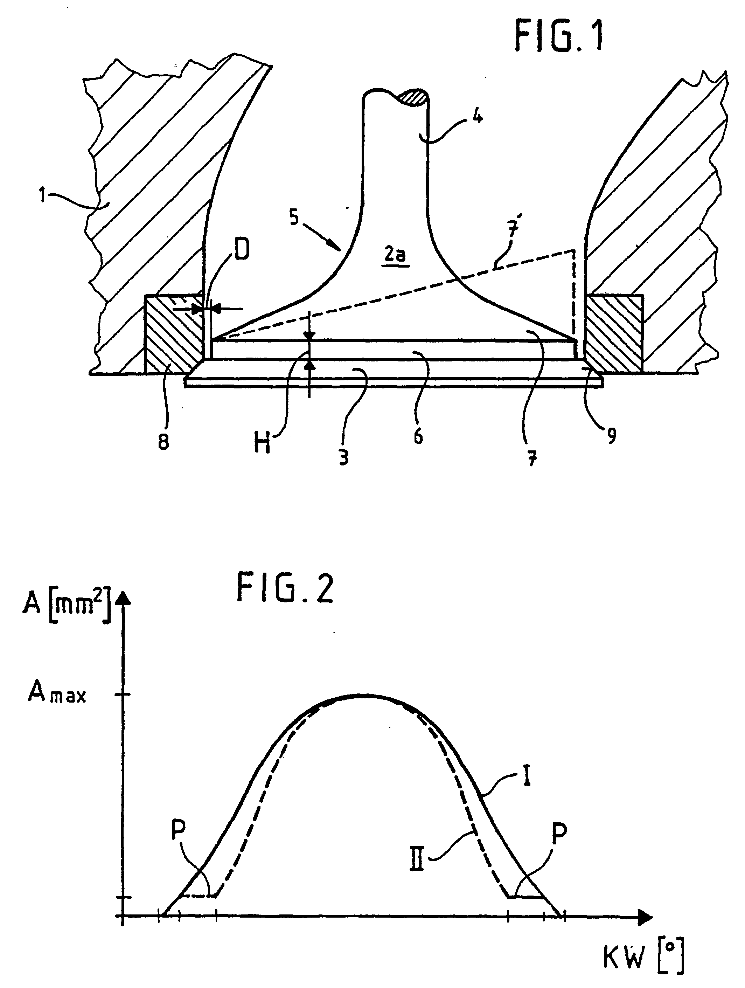

In Figur 1 ist ein Ausschnitt einer Brennkraftmaschine gezeigt, aus dem ein einzelnes in einem Zylinderkopf 1 gelagertes Einlaßventil 2a entnehmbar ist.

Dieses Einlaßventil 2a weist einen Ventilteller 3 und einen Ventilschaft 4 auf, wobei der Übergang 5 von dem flachen Ventilteller 3 zu dem geraden Ventilschaft 4 eine zylindrische Stufe 6 und einen konischen Abschnitt 7 umfaßt. Dadurch bedingt, ist das Einlaßventil 2a ein rotationssymmetrisches Bauteil, das kostengünstig angefertigt werden kann.

Alternativ kann der Übergang 5 von dem flachen Ventilteller 3 zu dem geraden Ventilschaft 4 aber auch die zylindrische Stufe 6 und einen zur Ventilachse schräg verlaufenden Abschnitt 7' aufweisen, wie dies in Figur 1 durch eine gestrichene Linie angedeutet ist..

Der Ventilteller 3 des Einlaßventils 2a wirkt mit einem Ventilsitz 8 im Zylinderkopf 1 zusammen, indem der Ventilteller 3 an seiner dem Ventilschaft 4 zugewandten Seite leicht angeschrägt ist und der Ventilsitz 8 eine korrespondierende Schräge 9 aufweist.

Der gerade Ventilschaft 4 des Einlaßventils 2a wirkt dagegen mit einer nicht dargestellten Ventilführung zusammen, in welcher der Ventilschaft 4 gleitend gelagert ist.

Befindet sich das Einlaßventil 2a nun, wie in Figur 1 dargestellt, in seiner geschlossenen Stellung, so ist die zylindrische Stufe 6 koaxial in dem Ventilsitz 8 angeordnet. Gemäß der gezeigten Ausführungsform beträgt dabei die Höhe der zylindrischen Stufe 6 ca. 18% des maximalen Ventilhubs und der Abstand D zwischen der Stufe 6 und dem Ventilsitz 8 ca. 2,5% des maximalen Ventilhubs.

In Figur 2 ist nun dargestellt, wie sich der Durchtrittsquerschnitt A in Abhängigkeit vom Kurbelwellenwinkel KW der Brennkraftmaschine verhält. Dabei ist die Linie I einem herkömmlichen Einlaßventil 2b zugeordnet, dessen Übergang 5 zwischen dem Ventilteller 3 und dem Ventilschaft 4 keine zylindrische Stufe, sondern lediglich einen konischen Abschnitt 7 aufweist, und ist die Linie II einem Einlaßventil 2a zugeordnet, dessen Übergang 5 die zylindrische Stufe 6 und einen konischen Abschnitt 7 aufweist.

Das Diagramm aus Figur 2 läßt gut erkennen, daß sich die Einlaßventile 2a, 2b mit und ohne Stufe 6 beim Öffnen während eines geringen Kurbelwellenwinkel- bzw. Hubbereichs gleich verhalten, während das Einlaßventil 2b ohne Stufe dann einen größeren Durchtrittsquerschnitt freigibt als das Einlaßventil 2a mit Stufe 6. Denn bei dem Einlaßventil 2a mit Stufe 6 bleibt der Durchtrittsquerschnitt über einen gewissen Kurbelwellenwinkelbereich bzw. Hubbereich konstant, wobei die Breite des sich ausbildenden Plateaus P von der Höhe H der zylindrischen Stufe 6 abhängt. Das heißt, das konstante Plateau P in Figur 2 ist um so breiter je höher die zylindrische Stufe 6 ausgebildet ist. Das Plateau P hängt aber auch von dem Abstand D zwischen der zylindrischen Stufe 6 und dem Ventilsitz 8 ab, denn je größer der Abstand D zwischen diesen beiden ist, um so höher liegt das Plateau P, da der Durchtrittsquerschnitt A dann größer ist.

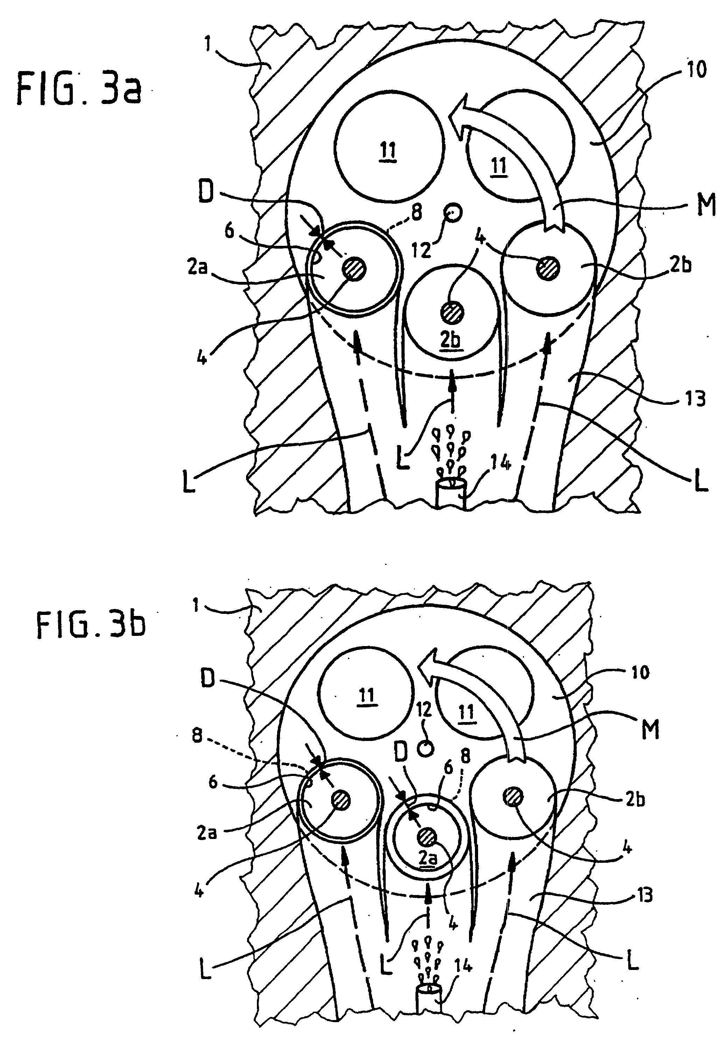

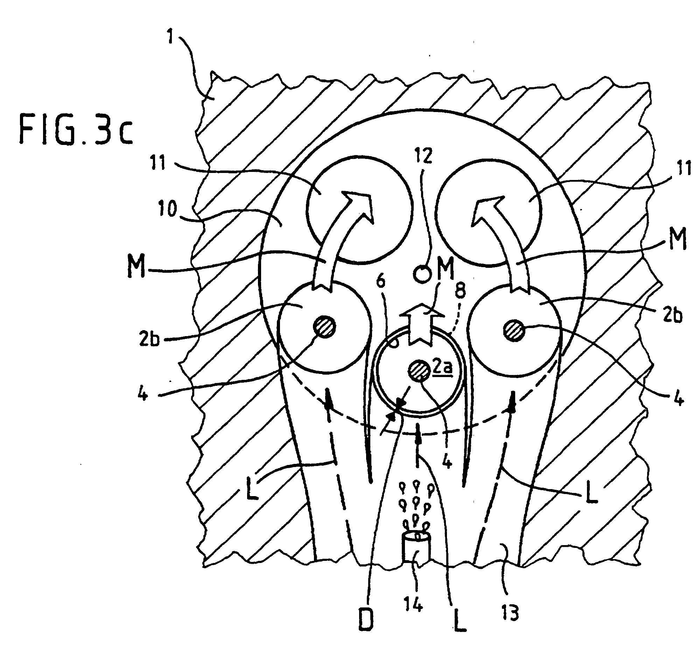

Die Figuren 3a, 3b und 3c zeigen jeweils eine schematische Teildarstellung des Zylinderkopfes 1 der erfindungsgmäßen Brennkraftmaschine, wobei pro Zylinder 10 der Brennkraftmaschine drei Einlaßventile 2a, 2b, zwei Auslaßventile 11, eine zentral angeordnete Zündeinrichtung 12 sowie eine im Einlaßkanal 13 angeordnete Einspritzeinrichtung 14 vorgesehen sind. Dabei wird die Einspritzvorrichtung 14 von der eingelassenen Luft L umströmt.

Um die Gemischaufbereitung durch erhöhte Ladungsbewegung zu verbessern, ist von den drei Einlaßventilen 2a, 2b gemäß Figur 3a das seitliche linke Einlaßventil 2a, mit der zylindrischen Stufe 6 ausgestattet, während das mittlere Einlaßventil 2b und das seitliche rechte Einlaßventil 2b keine Stufe 6 aufweisen. Durch diese Anordnung der Einlaßventile 2a, 2b tritt bezüglich der vollständigen Ventilöffnung ein zeitlicher Versatz zwischen dem linken Einlaßventil 2a und den beiden anderen Einlaßventilen 2b auf. Ausgelöst durch diesen zeitlichen Versatz, wird das einströmende Gasgemisch im wesentlichen zuerst durch die Einlaßöffnungen geleitet, die von dem mittleren und an dem seitlichen rechten Einlaßventil 2b beherrscht werden, bis auch das seitliche linke Einlaßventil 2a weit genug geöffnet ist. Dadurch erfolgt eine Aufspaltung der Strömungen, die schließlich zu einer drallförmigen Verwirbelung innerhalb der Brennkammer führt, wie sie durch den Pfeil M angedeutet ist.

Ist der Ventilhub durch eine variable Steuerung jedoch so weit reduziert, daß der Hub kleiner ist als die Höhe H der zylindrischen Stufe 6, so kommt dies einer Abschaltung des seitlichen linken Einlaßventils 2a gleich.

Gemäß Figur 3b sind dagegen zwei der drei Einlaßventile 2a, 2b, nämlich das seitliche linke und das mittlere Einlaßventil 2a, mit der Stufe 6 ausgestattet und weist nur das seitliche rechte Einlaßventil 2b keine solche Stufe 6 auf. In diesem Fall wird sich aufgrund der zeitverzögerten vollständigen Öffnung der Einlaßventile 2a, 2b eine verstärkte drallförmige Strömung ausbilden, die - ausgehend von den Einlaßventilen 2a mit Stufe 6 - über das Einlaßventil 2b ohne Stufe streicht und sich somit linksdrehend im Brennraum fortsetzt, wie dies wiederum durch den Pfeil M angegeben ist.

Außerdem kann die Stufe 6 des seitlichen linken Einlaßventils 2a eine geringere Höhe aufweisen als die Stufe 6 des mittleren Einlaßventils 2a. Dies kann die sich ausbildende Strömung ebenfalls positiv beeinflussen, da somit ein doppelter zeitlicher Versatz beim vollständigen Offnen der Einlaßventile 2a, 2b vorliegt.

Darüber hinaus können bei dieser Anordnung auch unterschiedliche Abstände D zwischen der Stufe 6 des seitlichen linken Einlaßventils 2a und dem Ventilsitz 8 sowie der Stufe 6 des mittleren Einlaßventils 2a und dem Ventilsitz 8 gewählt werden, um die Durchtrittsquerschnitte zu verändern.

Auch bei dieser Ausführungsform gilt, daß die variable Steuerung des Ventilhubs zur Abschaltung der beiden Einlaßventile 2a mit Stufe 6 eingesetzt werden kann. Zudem kann dann, wenn zwei der drei Einlaßventile 2a, 2b mit Stufe 6 ausgebildet sind und diese Stufen 6 unterschiedliche Höhen aufweisen, eine gestaffelte Abschaltung der Einlaßventile 2a mit Stufe 6 erfolgen.

Schließlich ist in Figur 3c eine weitere Ausführungsform dargestellt, bei der eine gezielte Ladungsschichtung erreicht werden kann, wenn nur das mittlere Einlaßventil 2a eine bevorzugt relativ hohe Stufe 6 aufweist. Die Kraftstoffeinspritzung erfolgt nämlich bevorzugt über den zu diesem Einlaßventil 2a führenden Einlaßkanal 13. Somit wird durch die hohe Strömungsgeschwindigkeit im Spalt zwischen dem Ventilsitz 8 und der Stufe 6 für eine sehr gute Gemischaufbereitung gesorgt und wird der Massenstrom an dem mittleren Einlaßventil 2a vorbei wesentlich geringer sein als an den seitlichen Einlaßventilen 2b vorbei, so daß im Bereich der mittig angeordneten Zündeinrichtung 12 ein deutlich fetteres Gemisch vorliegt. Die Ladungsschichtung ist durch die Pfeile M angedeutet.

Abgesehen von den in Figuren 3a, 3b und 3c dargestellten Ausführungsformen sind natürlich auch weitere Anordnungen denkbar, welche die verschiedensten Strömungsformen ausbilden können.

## Patentansprüche

1. Brennkraftmaschine mit einer Anzahl von Hubventilen für den Ladungswechsel, wobei
- pro Zylinder wenigstens zwei Einlaßventile sowie eine Anzahl Auslaßventile vorgesehen sind und
- die Einlaßventile einen Ventilteller und einen Ventilschaft aufweisen, wobei der Ventilteller mit einem Ventilsitz im Zylinderkopf zusammenwirkt und der Ventilschaft in einer Ventilführung im Zylinderkopf gleitend geführt ist,
**dadurch gekennzeichnet, daß**
wenigstens eines der Einlaßventile (2a) eine sich an den Ventilteller (3) anschließende und den Ventilschaft (4) koaxial umgebende im wesentlichen zylindrische Stufe (6) aufweist und wenigstens eines der Einlaßventile (2b) keine solche Stufe (6) aufweist.

2. Brennkraftmaschine nach Anspruch 1, **dadurch gekennzeichnet, daß** die zylindrische Stufe (6) des wenigstens einen Einlaßventils (2a) eine Höhe (H) von ca. 10% - 30% des maximalen Ventilhubs aufweist.

3. Brennkraftmaschine nach einem der Ansprüche 1 oder 2, **dadurch gekennzeichnet, daß** im geschlossenen Zustand der Einlaßventile (2a, 2b) zwischen der Stufe (6) des wenigstens einen Einlaßventils (2a) und dem Ventilsitz (8) ein Abstand (D) von ca. 0,5% - 8% des maximalen Ventilhubs besteht.

4. Brennkraftmaschine nach einem der Ansprüche 1 bis 3, **dadurch gekennzeichnet, daß** drei im wesentlichen nebeneinander angeordnete Einlaßventile (2a, 2b) vorgesehen sind, von denen eines der seitlichen Einlaßventile (2a) oder das mittlere Einlaßventil (2a) die Stufe (6) aufweist.

5. Brennkraftmaschine nach einem der Ansprüche 1 bis 3, **dadurch gekennzeichnet, daß** drei im wesentlichen nebeneinander angeordnete Einlaßventile (2a, 2b) vorgesehen sind, von denen die beiden seitlichen Einlaßventile (2a) oder eines der seitlichen Einlaßventile (2a) und das mittlere Einlaßventil (2a) die Stufe (6) aufweisen.

6. Brennkraftmaschine nach Anspruch 5, **dadurch gekennzeichnet, daß** die Stufe (6) des einen seitlichen Einlaßventils (2a) eine andere Höhe (H) aufweist als die Stufe (6) des mittleren Einlaßventils (2a).

7. Brennkraftmaschine nach einem der Ansprüche 5 oder 6, **dadurch gekennzeichnet, daß** die Stufe (6) des einen seitlichen Einlaßventils (2a) einen anderen Abstand (D) zum Ventilsitz (8) aufweist als die Stufe (6) des mittleren Einlaßventils (2a).

8. Brennkraftmaschine nach einem der Ansprüche 1 bis 7, **dadurch gekennzeichnet**, der Hub des wenigstens einen Einlaßventils (2a) mit Stufe (6) variabel steuerbar ist.

9. Brennkraftmaschine nach Anspruch 8, **dadurch gekennzeichnet, daß** der maximale Hub größer ist als die Höhe (H) der Stufe (6) des wenigstens einen Einlaßventils (2a).

10. Brennkraftmaschine nach Anspruch 8, **dadurch gekennzeichnet, daß** der maximale Hub kleiner ist als die Höhe (H) der Stufe (6) des wenigstens einen Einlaßventils (2a).

11. Brennkraftmaschine nach einem der Ansprüche 1 bis 10, **dadurch gekennzeichnet, daß** mindestens eine der zylindrischen Stufen (6) der Einlaßventile (2a) einen zur Ventilachse schräg verlaufenden Abschnitt (7') trägt und die Einlaßventile (2a) gegen ein Verdrehen gesichert sind.

12. Brennkraftmaschine nach einem der Ansprüche 1 bis 10, **dadurch gekennzeichnet, daß** die zylindrische Stufe (6) des wenigstens einen Einlaßventils (2a) einen sich verjüngenden rotationssymmetrischen Abschnitt (7) trägt.

## Claims

1. Internal combustion engine with multiple lift valves for exchange of the charge,
- there being provided at least two intake valves and multiple exhaust valves per cylinder, and
- the intake valves having a valve head and a valve stem, the valve head co-operating with a valve seat in the cylinder head and the valve stem being slidingly set in a valve guide in the cylinder head,
**characterised in that**
at least one of the intake valves (2a) incorporates a substantially cylindrical step (6) which is contiguous with the valve head (3) and coaxially surrounds the valve stem (4), and at least one of the intake valves (2b) does not incorporate such a step (6).

2. Internal combustion engine according to claim 1, **characterised in that** the cylindrical step (6) of the at least one intake valve (2a) has a height (H) of approx. 10% - 30% of the maximum valve lift.

3. Internal combustion engine according to either of claims 1 and 2, **characterised in that** when the intake valves (2a, 2b) are in the closed state, there is a distance (D) of approx. 0.5% - 8% of the maximum valve lift between the step (6) of the at least one intake valve (2a) and the valve seat (8).

4. Internal combustion engine according to any of claims 1 to 3, **characterised by** the provision of three intake valves (2a, 2b) arranged essentially alongside one another, of which one of the side intake valves (2a) or the middle intake valve (2a) incorporates the step (6).

5. Internal combustion engine according to any of claims 1 to 3, **characterised by** the provision of three intake valves (2a, 2b) arranged essentially alongside one another, of which the two side intake valves (2a) or one of the side intake valves (2a) and the middle intake valve (2a) incorporate(s) the step (6).

6. Internal combustion engine according to claim 5, **characterised in that** the step (6) of the one side intake valve (2a) is a different height (H) than the step (6) of the middle intake valve (2a).

7. Internal combustion engine according to either of claims 5 and 6, **characterised in that** the step (6) of the one side intake valve (2a) is a different distance (D) from the valve seat (8) than the step (6) of the middle intake valve (2a).

8. Internal combustion engine according to any of claims 1 to 7, **characterised in that** the lift of the at least one intake valve (2a) with the step (6) can be variably controlled.

9. Internal combustion engine according to claim 8, **characterised in that** the maximum lift is greater than the height (H) of the step (6) of the at least one intake valve (2a).

10. Internal combustion engine according to claim 8, **characterised in that** the maximum lift is less than the height (H) of the step (6) of the at least one intake valve (2a).

11. Internal combustion engine according to any of claims 1 to 10, **characterised in that** at least one of the cylindrical steps (6) of the intake valves (2a) bears a portion (7') which runs at an angle to the valve axis and the intake valves (2a) are locked against torsion.

12. Internal combustion engine according to any of claims 1 to 10, **characterised in that** the cylindrical step (6) of the at least one intake valve (2a) bears a tapering, dynamically balanced portion (7).

## Revendications

1. Moteur à combustion interne comportant une pluralilté de soupapes à mouvement linéaire pour le changement de la charge, dans lequel
- au moins deux soupapes d'admission ainsi qu'une pluralité de soupapes d'échappement sont prévues pour chaque cylindre et
- les soupapes d'admission présentent une tête de soupape et une tige de soupape, la tête de soupape coopérant avec un siège de soupape dans la culasse et la tige de soupape étant guidée à glissement dans un guidage de soupape ménagé dans la culasse,
**caractérisé en ce que**
au moins l'une des soupapes (2a) présente un étagement (6) sensiblement cylindrique, se raccordant à la tête de soupape (3) et entourant coaxialement la tige de soupape (4), et au moins l'une des soupapes d'admission (2b) ne présentant aucun étagement (6) de celle sorte.

2. Moteur à combustion interne selon la revendication 1, **caractérisé en ce que** l'étagement (6) cylindrique de la au moins une soupape d'admission (2a) a une hauteur (H) faisant environ 10% à 30% de la course maximale de la soupape.

3. Moteur à combustion interne selon l'une des revendications 1 ou 2,
**caractérisé en ce que**, lorsque. les soupapes d'admission (2a, 2b) sont à l'état fermé, il y a, entre l'étagement (6) de la au moins une soupape d'admission (2a) et le siège de soupape (8), un espacement (D) d'environ 0,5% à 8% de la course maximale de la soupape.

4. Moteur à combustion interne selon l'une des revendications 1 à 3,
**caractérisé en ce que** sont prévues trois soupapes d'admission (2a, 2b) disposées sensiblement les unes à côté des autres, dont l'une des soupapes d'admission (2a) latérale ou la soupape d'admission (2a) centrale présente l'étagement (6).

5. Moteur à combustion interne selon l'une des revendications 1 à 3,
**caractérisé en ce que** sont prévues trois soupapes d'admission (2a, 2b) disposées sensiblement les unes à côté des autres, dont les deux soupapes d'admission (2a) latérales ou bien l'une des soupapes d'admission (2a) latérale et la soupape d'admission centrale (2a) présentent l'étagement (6).

6. Moteur à combustion interne selon la revendication 5, **caractérisé en ce que** l'étagement (6) d'une soupape d'admission latérale (2a) est d'une hauteur (H) différente de la valeur de la hauteur de l'étagement (6) de la soupape d'admission centrale (2a).

7. Moteur à combustion interne selon l'une des revendications 5 ou 6,
**caractérisé en ce que** l'étagement (6) d'une soupape d'admission latérale (2a) présente par rapport au siège de soupape (8), un espacement (D) différent de celui présenté par l'étagement (6) de la soupape d'admission centrale (2a).

8. Moteur à combustion interne selon l'une des revendications 1 à 7,
**caractérisé en ce que** la course de la au moins une soupape d'admission (2a) ayant l'étagement (6) est susceptible d'être commandée de façon variable.

9. Moteur à combustion interne selon la revendication 8, **caractérisé en ce que** la course maximale est supérieure à la hauteur (H) de l'étagement (6) de la au moins une soupape d'admission (2a).

10. Moteur à combustion interne selon la revendication 8, **caractérisé en ce que** la course maximale est inférieure à la hauteur (H) de l'étagement (6) de la au moins une soupape d'admission (2a).

11. Moteur à combustion interne selon l'une des revendications 1 à 10,
**caractérisé en ce qu'**au moins l'un des étagements cylindriques (6) des soupapes d'admission (2a) porte un tronçon (7') s'étendant obliquement par rapport à l'axe de soupape et les soupapes d'admission (2a) sont bloquées en rotation.

12. Moteur à combustion interne selon l'une des revendications 1 à 10,
**caractérisé en ce que** l'étagement cylindrique (6) de la au moins une soupape d'admission (2a) porte un tronçon (7) à forme répondant à une symétrie de rotation, allant en s'effilant.
